# EUROPÄISCHE PATENTANMELDUNG

(11) **EP 0 914 921 A1**
(43) Veröffentlichungstag der Anmeldung: **12.05.1999**
(21) Anmeldenummer: 98119649.6
(22) Anmeldetag: 17.10.1998
(51) Int. Cl.: B29C 45/14, B29C 45/16, G06K 19/077

(54) **Verfahren und Vorrichtung zum Spritzgiessen von Codekarten**

(30) Priorität: 07.11.1997 DE 19749245
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung (40) dienen zum Herstellen von Codekarten (10), die eine Spule (12) enthalten. Zunächst wird eine erste Kartenhälfte in einem ersten Formhohlraum (48) spritzgegossen. Die Spule (12) wird an der ersten Kartenhälfte angebracht. Nach Überführen der ersten Kartenhälfte vom ersten Formhohlraum (48) in einen zweiten Formhohlraum (49/50) wird eine zweite Kartenhälfte auf die erste Kartenhälfte aufgespritzt, derart, daß die Spule (12) zwischen den beiden Kartenhälften eingebettet ist.

## Beschreibung

Die Erfindung betrifft allgemein Verfahren und Vorrichtungen zum Spritzgießen von Kunststoffteilen, bei denen Gegenstände allgemeiner Art im Kunststoffteil eingebettet werden sollen.

Die Erfindung betrifft insbesondere ein Verfahren zum Spritzgießen von eine Spule enthaltenden Codekarten.

Die Erfindung betrifft ferner insbesondere eine Vorrichtung zum Spritzgießen von eine Spule enthaltenden Codekarten, mit einem Werkzeug und mit Formhohlräumen im Werkzeug.

Es sind bereits zahlreiche Verfahren und Vorrichtungen bekannt, um Codekarten herzustellen. Unter "Codekarten" sind dabei Scheckkarten, Kreditkarten, Zugangsberechtigungskarten und dergleichen zu verstehen, aber auch Elemente, wie sie z.B. zur Warensicherung eingesetzt werden. Bei bestimmten Bauarten derartiger Codekarten enthält die Karte eine Spule, die z.B. als Antenne eines Hochfrequenz-Empfangs- oder Sendekreises oder als Spule eines Hochfrequenzresonanzkreises geschaltet ist.

Unter "Codekarten" sind dabei auch und insbesondere sogenannte "Hybridkarten" zu verstehen. Hybridkarten sind Codekarten, bei denen der Chip sowohl mit einer Antenne wie auch mit elektrischen Außenkontakten verbunden ist. Eine Hybridkarte kann daher sowohl drahtlos wie auch durch körperliche elektrische Kontaktgabe verwendet werden. Bei Codekarten befindet sich der Chip üblicherweise in einer Baueinheit, die aus dem Chip selbst sowie einem mechanischen Träger besteht. Diese Baueinheit wird auch als "Modul" bezeichnet. Bei der Herstellung einer Hybridkarte muß folglich eine Antenne im Inneren der Karte angeordnet werden, während sich das Modul teilweise im Inneren und teilweise an einer Außenfläche der Karte befindet, wo die elektrischen Kontakte an der Oberfläche der Karte zugänglich sind.

Je nachdem, welcher Kartentyp hergestellt werden soll, muß daher die Bestückung mit den einzulegenden Komponenten (Antenne, Chip, Träger, Außenkontakt) entsprechend ausgestaltet werden.

Bei Codekarten herkömmlicher Bauart wird die Spule entweder durch Laminieren zwischen zwei Kunststoffolien eingeschweißt, oder sie wird bei einer Herstellung durch Spritzgießen in den Formhohlraum eines Werkzeugs der Spritzgießmaschine eingelegt, so daß nach dem Umspritzen der Spule mit Kunststoffmasse die Spule sich im Bereich einer Oberfläche der fertigen Karte befindet.

Durch Laminieren hergestellte Codekarten werden üblicherweise in Warensicherungssystemen zum Vermeiden von Ladendiebstählen eingesetzt. Es handelt sich dabei um relativ dünne und flexible Gebilde, die häufig auch nur im Einmalgebrauch eingesetzt werden.

Bei Codekarten, wie sie als Scheckkarten, Kreditkarten oder Zugangsberechtigungsausweise eingesetzt werden, ist die Struktur stabiler, weil die durch Spritzgießen hergestellten Karten dicker ausgebildet sind. Wenn sich bei diesen Karten die Antenne jedoch an einer Oberfläche der Karte befindet, ist sie optisch sichtbar, was in der Regel unerwünscht ist. Derartige Karten müßten daher durch Einlegen von Etiketten oder durch nachträgliche Behandlung so gestaltet werden, daß die Spule nicht von außen sichtbar ist. Eine an der Oberfläche der Karte liegende Spule ist darüber hinaus auch gegenüber mechanischen Belastungen empfindlicher. Dies gilt insbesondere deswegen, weil die in den Spulen verwendeten Drähte außerordentlich dünn sind, so daß eine an der Oberfläche der Karte liegende Spule funktionell beschädigt werden kann, wenn durch einen Kratzer an dieser Oberfläche ein Draht der Spule durchtrennt wird.

Allgemein gesprochen erstreckt sich der Anwendungsbereich der Erfindung generell auf solche Kunststoffteile, bei denen beliebige Gegenstände in dem Kunststoffteil eingebettet werden sollen. Diese Gegenstände können wiederum plastische Teile sein, beispielsweise Magnete, Metallteile und dergleichen. Man kann aber auch mindestens eine Hälfte des herzustellenden Kunststoffgegenstandes transparent ausbilden, so daß der eingelegte Gegenstand von außen betrachtet werden kann. Der eingelegte Gegenstand kann dabei ein aufgedruckter oder aufgedampfter Schriftzug oder ein solches Bild sein, er kann aber auch ein Hologramm sein, eine Fotografie oder nur aus einer plastischen Bearbeitung einer Oberfläche einer Hälfte des Kunststoffgegenstandes bestehen.

Der Erfindung liegt im Anwendungsfall der Codekarten die Aufgabe zugrunde, ein Verfahren und eine Vorrichtung der vorstehend genannten Art dahingehend weiterzubilden, daß diese Nachteile vermieden werden. Insbesondere soll es möglich sein, durch Spritzgießen eine stabile Codekarte herzustellen, bei der die Spule nicht nur nicht-sichtbar, sondern darüber hinaus im Inneren der Spule sicher angeordnet ist.

Bei einem Verfahren der eingangs genannten Art wird entsprechend diese Aufgabe erfindungsgemäß durch die folgenden Schritte gelöst:
a) Spritzgießen einer ersten Kartenhälfte;
b) Anbringen der Spule an der ersten Kartenhälfte; und
c) Spritzgießen einer zweiten Kartenhälfte auf die erste Kartenhälfte, derart, daß die Spule zwischen den beiden Kartenhälften eingebettet ist.

Bei einer Vorrichtung der eingangs genannten Art wird die der Erfindung zugrunde liegende Aufgabe dadurch gelöst, daß bei geschlossenem Werkzeug erste Formhohlräume der Form einer ersten Kartenhälfte und zweite Formhohlräume der Form der fertigen Codekarte entsprechen, das erste Mittel zum Anbringen der Antenne an der ersten Kartenhälfte und das zweite Mittel vorgesehen sind, um die in den ersten Formhohlräumen spritzgegossenen Kartenhälften in die zweiten Formhohlräume zu überführen, derart, daß durch Aufspritzen einer zweiten Kartenhälfte auf die erste Kartenhälfte die fertige Codekarte hergestellt wird, bei der die Antenne zwischen den beiden Kartenhälften eingebettet ist.

Die der Erfindung zugrunde liegende Aufgabe wird auf diese Weise vollkommen gelöst.

Dadurch, daß die Antenne zwischen zwei Kartenhälften eingebettet ist, vorzugsweise also in die Mitte der spitzgegossenen Codekarte verlegt ist, befindet sich die Spule am mechanisch sichersten Ort der Codekarte, und sie kann auch von außen nicht erkannt werden.

Bei einer bevorzugten Ausgestaltung des erfindungsgemäßen Verfahrens werden die Schritte a) und c) in dem selben Werkzeug einer Spritzgießmaschine ausgeführt.

Diese Maßnahme hat den Vorteil, daß eine sehr schnelle Fertigung möglich ist, was bei einer Massenproduktion zu erheblichen wirtschaftlichen Vorteilen führt.

Bei einer Weiterbildung dieser Variante wird Schritt a) in einem ersten Formhohlraum und Schritt b) und/oder Schritt c) in einem zweiten Formhohlraum des Werkzeugs ausgeführt.

Bei einer ersten Variante dieses Ausführungsbeispiels wird die erste Kartenhälfte vom ersten Formhohlraum in den zweiten Formhohlraum durch Verdrehen zweier Werkzeughälften zueinander überführt.

Diese Maßnahme hat den Vorteil, daß der Wechsel von Hohlraum zu Hohlraum in der kürzest möglichen Zeit erfolgen kann, darüber hinaus ist auch ein Öffnen des Werkzeugs nicht erforderlich. Allerdings muß bei dieser Variante die Spule in das Werkzeug eingelegt werden.

Bei einer zweiten Variante wird die erste Kartenhälfte vom ersten Formhohlraum in den zweiten Formhohlraum mittels eines ersten Handlingsystems überführt, das im geöffneten Zustand des aus zwei axial zueinander verfahrbaren Werkzeughälften bestehenden Werkzeugs zwischen die Werkzeughälften einfährt.

Diese Maßnahme hat den Vorteil, daß die Fertigung der Codekarte mittels an sich bekannter und handelsüblicher Handlingsysteme durchgeführt werden kann, wobei ebenfalls handelsübliche Werkzeuge einsetzbar sind.

Bei einer dritten Variante wird die erste Kartenhälfte vom ersten Formhohlraum in den zweiten Formhohlraum mittels eines ersten Handlingsystems überführt, das im geöffneten Zustand des aus einem Mittelpaket von zwei auf gegenüberliegenden Seiten desselben angeordneten Werkzeughälften bestehenden Etagenwerkzeugs zwischen das Mittelpaket und die beiden Werkzeughälften einfährt.

Bei dieser Variante ist von Vorteil, daß die Möglichkeiten eines Etagenwerkzeugs ausgenutzt werden können, insbesondere die Fertigung einer hohen Stückzahl bei jedem einzelnen Spritzzyklus.

Eine gute Wirkung wird bei diesem Ausführungsbeispiel dadurch erzielt, daß die erste Kartenhälfte von der einen Seite des Mittelpakets zu dessen anderer Seite überführt wird.

Diese Maßnahme hat den Vorteil, daß ein einfacher Bewegungsablauf erreicht wird.

Bei weiteren Ausführungsbeispielen der Erfindung werden die Schritte a) und b) gleichzeitig innerhalb eines Werkzeugs einer Spritzgießmaschine ausgeführt.

Dies gilt insbesondere dann, wenn die Spule in einen ersten Formhohlraum eingelegt und zur Herstellung der ersten Kartenhälfte mit Kunststoffmasse umspritzt wird.

Auch bei dieser Variante ergibt sich der Vorteil einer kurzen Zykluszeit, wenngleich die Spule in das Werkzeug eingelegt werden muß.

Folglich eignet sich dieses Ausführungsbeispiel des erfindungsgemäßen Verfahrens insbesondere für solche Konfigurationen, bei denen die Werkzeughälften nach dem Umspritzen verdreht werden.

Bei anderen Ausführungsbeispielen der Erfindung werden die Schritte a) und b) zeitlich nacheinander ausgeführt.

Diese Maßnahme hat den Vorteil, daß eine größere Flexibilität erreicht werden kann; insbesondere können übliche Handlingsysteme eingesetzt werden.

Bei einer bevorzugten Weiterbildung dieser Variante wird zum Durchführen von Schritt b) eine Heißpreßstation verwendet. Diese Maßnahme hat den Vorteil, daß eine Verbindung von Spule und erster Kartenhälfte in besonders einfacher Weise und bei kurzer Zykluszeit mit einer geeigneten Station ausgeführt werden kann.

Bei einer Weiterbildung dieser Variante wird die erste Kartenhälfte mittels eines zweiten Handlingsystems vom Werkzeug zur Heißpreßstation überführt. Besonders bevorzugt ist, wenn das zweite Handlingsystem und das erste Handlingsystem dasselbe Handlingsystem sind.

Zum Anbringen der Spule auf der ersten Kartenhälfte wird vorzugsweise eine separate Anbringstation verwendet. Diese Anbringstation kann beliebige Anbringtechniken ausführen. Hierzu gehören Klebeverfahren, thermische Verbindungsverfahren, Aufdrucken, Bedampfen, mechanisches Fügen und dergleichen mehr.

So kann bevorzugterweise die Spule in der Anbringstation durch Kleben an der ersten Kartenhälfte angebracht werden. Besonders bevorzugt ist, wenn die Spule dabei zusammen mit einer Träger-Klebefolie für die Spule an der ersten Kartenhälfte angebracht wird. Dies gilt insbesondere dann, wenn die Träger-Klebefolie mit der Spule und zusammen mit einem mit der Spule galvanisch verbundenen und ebenfalls auf der Träger-Klebefolie angeordneten Chip an der ersten Kartenhälfte angebracht wird.

Diese Maßnahme hat den Vorteil, daß eine sehr einfache und lediglich mechanisch auszuführende Befestigung der Spule oder des Verbundes Spule/Chip oder des Verbundes Spule/Trägerfolie usw. erforderlich ist. Als Kleber kann dabei alternativ ein Haftkleber oder ein thermisch oder sonstwie aktivierbarer Kleber eingesetzt werden.

Bei anderen Varianten der Erfindung kann die Spule auf die erste Kartenhälfte aufgedruckt und ein Chip in der Anbringstation an der mit der Spule bedruckten ersten Kartenhälfte angebracht werden.

Bei besonders bevorzugten Ausführungsformen der Erfindung wird zum Heißpressen der Spule auf der ersten Kartenhälfte die Spule vorzugsweise in der Heißpreßstation nur abschnittsweise mit der ersten Kartenhälfte verbunden.

Diese Maßnahme hat den Vorteil, daß der Aufwand beim Heißpressen minimiert werden kann, andererseits aber die Halterung der Spule an der ersten Kartenhälfte zuverlässig ausgestaltet werden kann.

Besonders bevorzugt ist, wenn die erste Kartenhälfte in der Heißpreßstation zumindest an ihrer für das Anbringen der Spule vorgesehenen Oberfläche erweicht wird.

Diese Maßnahme hat den Vorteil, daß die Spule oder ein anderer Gegenstand in die erweichte Oberfläche der ersten Kartenhälfte eingedrückt werden kann. Das Erweichen der Oberfläche kann z.B. dadurch bewirkt werden, daß ein entsprechend erwärmter Preßstempel in der Heißpreßstation verwendet wird. Alternativ kann die Oberfläche aber auch durch thermische Strahlung erweicht werden, beispielsweise durch Infrarot-Strahler, die sich im Handlingsystem befinden.

Eine besonders gute Wirkung wird erzielt, wenn auf der ersten Kartenhälfte entlang der Kontur der Spule bereichsweise beidseits der Kontur Wülste ausgebildet werden und die Spule zwischen die Wülste eingelegt wird, wobei die Wülste nach dem Einlegen der Spule durch Heißpressen umgeformt werden, derart, daß sie die Spule auf deren Oberseite überlappen.

Diese Maßnahme hat den Vorteil, daß in sehr einfacher Weise die notwendige Fixierung der Spule auf der ersten Kartenhälfte erreicht werden kann.

Besonders bevorzugt ist ferner, wenn die Spule zusammen mit einem Chip als gemeinsame Anordnung gehandhabt wird. Dies gilt insbesondere dann, wenn die Anordnung von Spule und Chip auf einer Folie oder in/an einem Kunststoffplättchen konfektioniert wird.

Diese Maßnahmen haben den Vorteil, daß das sehr empfindliche Gebilde von Chip und Spule ohne die Gefahr von Beschädigungen gehandhabt werden kann.

Es wurde bereits mehrfach erwähnt, daß die Erfindung keineswegs auf das Anwendungsgebiet der Herstellung von eine Spule enthaltenden Codekarten beschränkt ist. Die Erfindung kann vielmehr ganz allgemein für solche Anwendungsfälle eingesetzt werden, bei denen es darum geht, ein Kunststoffteil herzustellen, bei dem ein Gegenstand zwischen den beiden Hälften eingebettet ist.

Der Gegenstand kann dabei ein Aufdruck, eine Bedampfung oder dergleichen sein. Auch ist es möglich, den Gegenstand als Folie, insbesondere bedruckte Folie, auszubilden. Weiterhin ist bevorzugt, wenn der Gegenstand ein plastisches Teil, beispielsweise ein Hologramm oder ein Magnet, ist. Schließlich kann der Gegenstand auch durch eine Bearbeitung einer Oberfläche der ersten Hälfte, beispielsweise durch eine Gravierung, dargestellt werden. Die letztgenannten Fälle sind besonders dann von Interesse, wenn mindestens eine der Hälften des Kunststoffteils aus einem transparenten Material besteht, so daß die Gegenstände der genannten Art von außen betrachtet werden können.

Bei bevorzugten Weiterbildungen der erfindungsgemäßen Vorrichtung kann das Werkzeug bei einem ersten Ausführungsbeispiel aus zwei zueinander verdrehbaren Werkzeughälften bestehen, wobei die erste Kartenhälfte durch Verdrehen der Werkzeughälften zueinander vom ersten Formhohlraum in den zweiten Formhohlraum überführt wird.

Bei einem zweiten Ausführungsbeispiel besteht das Werkzeug aus zwei axial zueinander verfahrbaren Werkzeughälften, wobei ein erstes Handlingsystem vorgesehen ist, um im geöffneten Zustand der Werkzeughälften die erste Kartenhälfte vom Formhohlraum in den zweiten Formhohlraum zu überführen.

Schließlich ist bei einem dritten Ausführungsbeispiel das Werkzeug ein Etagenwerkzeug mit einem Mittelpaket und zwei auf gegenüberliegenden Seiten desselben angeordneten Werkzeughälften, wobei ein erstes Handlingsystem vorgesehen ist, um im geöffneten Zustand des Werkzeugs die erste Kartenhälfte vom ersten Formhohlraum zum zweiten Formhohlraum zu überführen. Vorzugsweise ist der erste Formhohlraum dabei auf der einen Seite und der zweite Formhohlraum auf der anderen Seite des Mittelpakets angeordnet.

Auch bei diesen Ausführungsbeispielen der Erfindung ist bevorzugt, wenn ein gemeinsames Handlingsystem zum Überführen der Kartenhälfte zwischen den Formhohlräumen und auch zum Überführen der Kartenhälfte von der und zu der Heißpreßstation verwendet wird.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen schematisierten Querschnitt durch eine Codekarte, in stark vergrößertem Maßstab;
- Fig. 2: einen schematisierten Ausschnitt, im Querschnitt, durch ein erstes Ausführungsbeispiel eines erfindungsgemäßen Werkzeugs;
- Fig. 3: eine schematische Ansicht eines Ausführungsbeispiel einer Spritzgießmaschine mit einem zweiten Ausführungsbeispiel eines erfindungsgemäßen Werkzeugs;
- Figuren 4 bis 17: Darstellungen ähnlich Fig. 3, zur Erläuterung aufeinanderfolgender Schritte bei einem Ausführungsbeispiel eines erfindungsgemäßen Verfahrens;
- Fig. 18: eine Draufsicht auf eine Kartenhälfte einer Codekarte, in vergrößertem Maßstab;
- Figuren 19 bis 22: schematische Schnittansichten der Kartenhälfte gemäß Fig. 18 entlang der Linie IXX-XXII - IXX-XXII gemäß Fig. 18 zur Erläuterung aufeinanderfolgender Schritte eines Heißpreßverfahrens;
- Fig. 23: eine weitere Darstellung nach Art von Fig. 3, darstellend ein weiteres Ausfürungsbeispiel einer Spritzgießmaschine mit einem dritten Ausführungsbeispiel eines Werkzeugs.

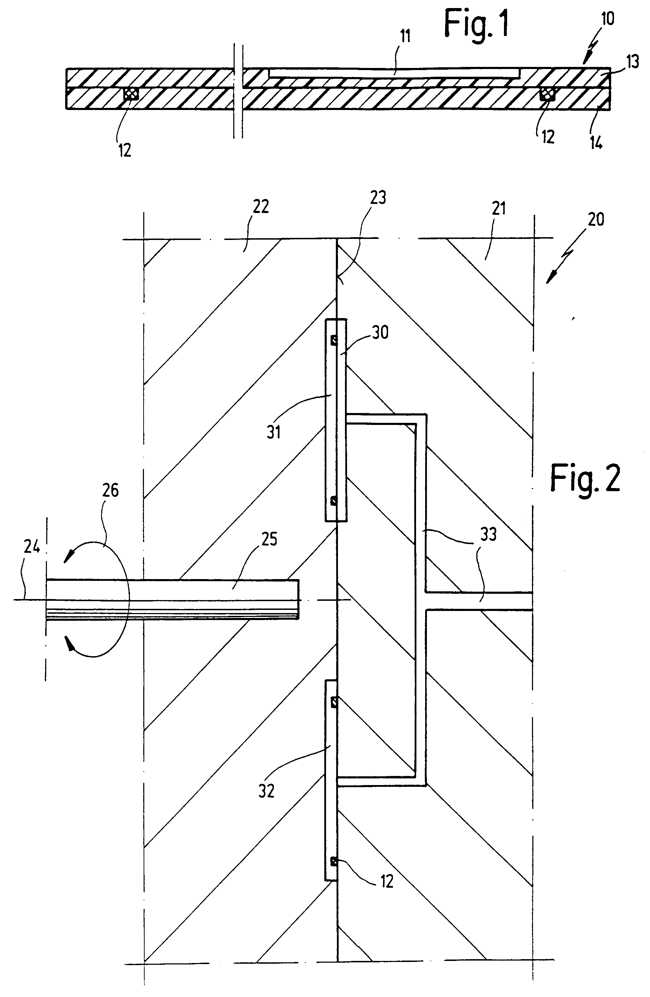

In Fig. 1 bezeichnet 10 insgesamt eine Codekarte, wie sie z.B. als Kreditkarte, Scheckkarte, Zugangsberechtigungsausweis, als Warensicherung oder dergleichen eingesetzt werden kann. Die Karte 10 ist durch Spritzgießen hergestellt.

Die Karte 10 ist mit einem in Fig. 1 nur schematisch angedeuteten Chip 11 versehen, durch den elektronische Sende- oder Empfangsfunktionen, eine Chiffrierung und dergleichen darstellbar sind.

In der Karte 10 befindet sich eine Antennenspule 12, die als Ringspule ausgebildet ist.

Die Karte 10 besteht aus einer ersten Kartenhälfte 13 und einer zweiten Kartenhälfte 14, die in noch zu beschreibender Weise hergestellt werden. Die Spule 12 ist zwischen den beiden Kartenhälften 13, 14 eingebettet.

Fig. 2 zeigt einen Ausschnitt aus einem Werkzeug 20. Das Werkzeug 20 weist eine feste Werkzeughälfte 21 sowie eine dazu axial bewegliche und verdrehbare Werkzeughälfte 22 auf. Die Werkzeughälften 21, 22 liegen in der Darstellung gemäß Fig. 2 entlang einer Trennebene 23 aneinander. Eine Mittenachse 24 definiert die Lage einer Welle 25 in der beweglichen Werkzeughälfte 22. Mittels der Welle 25 kann die bewegliche Werkzeughälfte 22 gegenüber der festen Werkzeughälfte 21 verdreht werden, wie mit einem Pfeil 26 angedeutet. Zum Bestücken und Entformen ist die bewegliche Werkzeughälfte 22 darüber hinaus in Richtung der Achse 24 von der festen Werkzeughälfte 21 wegfahrbar (und umgekehrt).

In der festen Werkzeughälfte 21 ist im Bereich der Trennebene 23 ein erster Formhohlraum 30 vorgesehen. Dieser steht einem zweiten Formhohlraum 31 in der beweglichen Werkzeughälfte 22 gegenüber.

In dem selben radialen Abstand von der Achse 24 befindet sich ein dritter Formhohlraum 32 in der beweglichen Werkzeughälfte 22. Die Formhohlräume 31 und 32 sind von der Formgebung her identisch. Bevorzugt ist ferner, wenn die Formhohlräume 30, 31, 32 insgesamt von identischer Formgebung sind und jeweils der Größe der Kartenhälften 13, 14 gemäß Fig. 1 entsprechen. Die Kartenhälften 13, 14 haben vorzugsweise die halbe Dicke der Karte 10. Es sind aber auch Karten 10 denkbar, bei denen die Kartenhälften 13, 14 unterschiedlich dick sind, wobei dann der erste Formhohlraum 30 die erste Dicke und der zweite und dritte Formhohlraum 31, 32 die zweite Dicke aufweisen würden.

Ein Leitungssystem 33 für die einzuspritzende Kunststoffmasse führt einerseits zum ersten Formhohlraum 30 sowie zum dritten Formhohlraum 32. Die Formhohlräume 30 und 32 können dabei gleichzeitig mit Kunststoff ausgespritzt werden; durch eine geeignete Zeitsteuerung ist bei Verwendung von geeigneten Ventilen aber auch ein anderer Spritzablauf möglich.

Zum Herstellen der Karte 10 wird die Spule 12 im Bereich des dritten Formhohlraums 32 bei geöffnetem Werkzeug auf die dem dritten Formhohlraum 32 gegenüberliegende Oberfläche der festen Werkzeughälfte 21 aufgelegt und mittels geeigneter Maßnahmen fixiert. Der dritte Formhohlraum 32 wird nun über das Leitungssystem 33 mit Kunststoffmasse ausgespritzt. Dabei wird die Spule 12 im dritten Formhohlraum 32 umspritzt.

Als Ergebnis dieses Zwischenschrittes wurde somit die zweite Kartenhälfte 14 mit darin eingebetteter Spule 12 hergestellt.

Die Werkzeughälften 21 und 22 werden nun geöffnet. Die bewegliche Werkzeughälfte 22 wird nun verdreht, bis sich der dritte Formhohlraum 32 gegenüber dem ersten Formhohlraum 30 befindet. Gleichzeitig gelangt auf diese Weise der zweite Formhohlraum 31 an die Position, an der sich vorher der dritte Formhohlraum 32 befand. In diesem Bereich wird bei geöffnetem Werkzeug 20 eine neue Spule 12 eingelegt.

Nach erneutem Schließen des Werkzeugs 20 wird nun der erste Formhohlraum 30 mit Kunststoffmasse ausgespritzt, d.h. es wird die erste Kartenhälfte 13 auf die zweite Kartenhälfte 14 aufgespritzt. Gleichzeitig wird im zweiten Formhohlraum 31, der sich jetzt an der Position befindet, an der sich in der Darstellung gemäß Fig. 2 der dritte Formhohlraum 32 befand, eine weitere zweite Kartenhälfte 14 mit umspritzter Spule 12 hergestellt.

Das Spiel wiederholt sich nun in beliebiger Folge.

Es versteht sich, daß die Formhohlräume gegenüber der Achse 24 um 180° versetzt angeordnet sein können, wie dies in Fig. 2 als Beispiel dargestellt ist. Die Formhohlräume können aber auch über einen Umfang um einen anderen Winkel versetzt angeordnet sein, so daß die bewegliche Werkzeughälfte 22 nach jedem Öffnen um diesen Winkel (nicht notwendigerweise 180°) gedreht wird. Die bewegliche Werkzeughälfte 22 kann dabei kontinuierlich gedreht oder hin- und hergedreht werden.

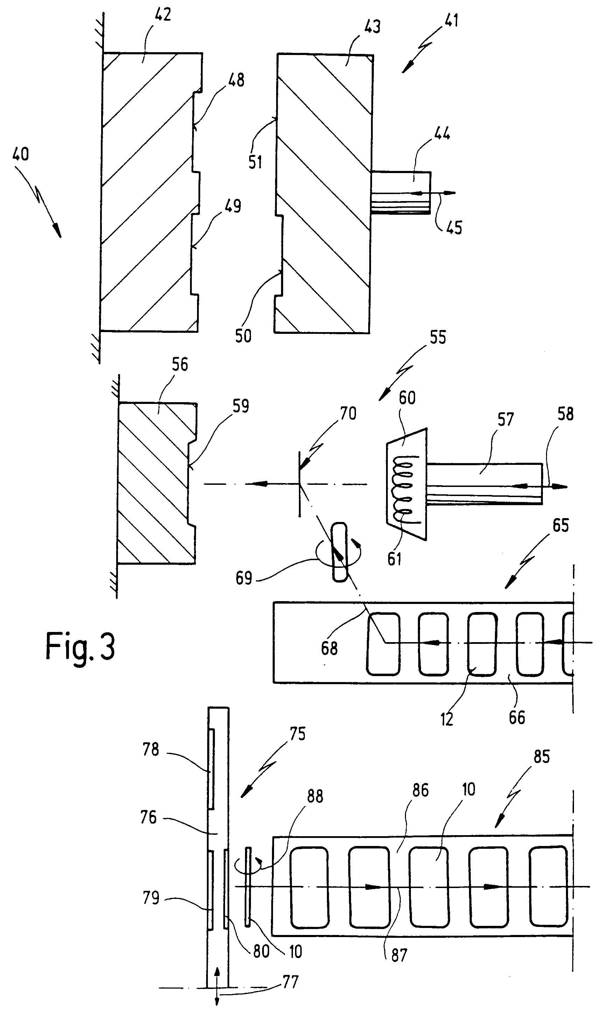

Bei dem nächsten Ausführungsbeispiel gemäß Fig. 3 ist mit 40 insgesamt eine Spritzgießmaschine bezeichnet. Die in Fig. 3 dargestellte Spritzgießmaschine 40 kann zum Herstellen von beliebigen Kunststoffteilen verwendet werden, bei denen es darum geht, in das Kunststoffteil einen Gegenstand einzubetten, und zwar vorzugsweise zwischen zwei Hälften dieses Kunststoffteils. Wenn nachstehend die Erfindung anhand eines Ausführungsbeispiels beschrieben wird, bei dem das Kunststoffteil eine Codekarte mit eingebetteter Spule ist, so darf dies nur beispielhaft verstanden werden. Eine Einschränkung der Erfindung ist damit nicht verbunden.

Die Spritzgießmaschine 40 umfaßt ein Werkzeug 41 von herkömmlicher Bauart. Das Werkzeug 41 weist eine feste Werkzeughälfte 42 sowie eine bewegliche Werkzeughälfte 43 auf. Hierzu ist die bewegliche Werkzeughälfte 43 mit einer Stange 44, beispielsweise einer Kolbenstange, verbunden, so daß die bewegliche Werkzeughälfte 43 axial relativ zur festen Werkzeughälfte 42 verfahrbar ist, wie mit einem Doppelpfeil 45 angedeutet.

Bei dem in Fig. 3 in geöffnetem Zustand dargestellten Werkzeug 41 ist die feste Werkzeughälfte 42 mit einem ersten Formhohlraum 48 sowie einem zweiten Formhohlraum 49 versehen. Dem zweiten Formhohlraum 49 steht in der beweglichen Werkzeughälfte 43 ein dritter Formhohlraum 50 gegenüber. Im Bereich des ersten Formhohlraums 48 ist die bewegliche Werkzeughälfte 43 mit einer glatten Oberfläche 51 versehen.

Auch hier ist bevorzugt, daß die Formhohlräume 48, 49, 50 untereinander von identischer Formgebung sind, die wiederum der Größe einer Kartenhälfte 13, 14 entspricht.

Neben dem Werkzeug 41 befindet sich eine Heißpreßstation 55. Die Heißpreßstation 55 umfaßt eine feste Pressenhälfte 56 sowie eine bewegliche Pressenhälfte 57. Eine Preßform 59 (Matrize) ist in der festen Pressenhälfte 56 angeordnet. Auch sie entspricht in ihrer Formgebung im wesentlichen der Form einer Kartenhälfte 13, 14. Die Lage der Preßform 59 ist in etwa so vorgesehen, daß sie in einer Ebene mit den Formhohlräumen 48 und 49 fluchtet.

Die bewegliche Pressenhälfte 57 umfaßt einen Stempel 60 (Patrize), der mit einer Heizung 61 versehen ist. Wie mit einem Doppelpfeil 58 angedeutet, kann der Stempel 60 in axialer Richtung bewegt und schließlich auf die Preßform 59 aufgesetzt werden.

Unmittelbar neben der Heißpreßstation 55 ist eine Zuführeinrichtung 65 für die Spulen 12 vorgesehen. Die Zuführeinrichtung 65 umfaßt einen ersten Förderer 66, beispielsweise ein Förderband. Auf dem ersten Förderer 66 werden die Spulen 12 von einem nicht dargestellten Lager einzeln zugeführt. Mit einer strich-punktierten Linie ist ein abgewinkelter Förderweg 68 für die Spulen 12 dargestellt. Die Spulen 12 liegen auf dem ersten Förderer 66 eben auf. Sie werden dann, von einem Pfeil 69 angedeutet, um 90° gedreht, so daß sie in einer Übergabeposition 70 ankommen, die in der Bewegungsachse des Stempels 60 liegt. In dieser Übergabeposition 70 erstrecken sich die Spulen 12 parallel zu Breitseite, d.h. zu Auflagefläche der Preßform 59.

Die Spulen 12 bestehen vorzugsweise aus einer Anordnung einer Spule mit einem galvanisch damit verbundenen Chip. Da die Anordnung aus Spule und Chip sehr empfindlich ist, kann sie z.B. auf einer Folie oder in/an einem Kunststoffplättchen oder dergleichen konfektioniert sein. Auf diese Weise wird einer Beschädigung der Anordnung bei ihrer Handhabung vorgebeugt.

Auch an dieser Stelle sei nochmals darauf hingewiesen, daß die vorstehend erläuterten Spulen und Chips ebenso wie die erläuterte Heißpreßstation nur beispielhaft zu verstehen sind.

Die Heißpreßstation ist in allgemeiner Betrachtung eine Anbringstation, bei der beliebige Gegenstände an der ersten Kartenhälfte angebracht werden können. Bei den Gegenständen kann es sich um plastische Teile, beispielsweise Kunststoffteile, Metallteile, Magnete, Hologramme, Fotografien und dergleichen handeln. Die Gegenstände können aber auch Folien, insbesondere bedruckte Folien, sein. Schließlich ist unter "Gegenstand" auch ein Aufdruck oder eine sonstige Oberflächenbehandlung oder -bearbeitung in Form eines Aufdampfens oder einer mechanischen Bearbeitung zu verstehen, beispielsweise in Form einer Gravur. Diese Gegenstände können in einer Anbringstation nicht nur durch Heißpressen sondern auch in anderer Weise angebracht werden. Dies kann durch Kleben, Fügen oder sonstwie geschehen. Sofern ein thermisches Verbinden angesprochen ist, kann diejenige Oberfläche, an der der Gegenstand angebracht werden soll, entsprechend vorbereitet werden. Die Vorbereitung kann in einem thermischen Aufweichen bestehen. Die Oberfläche kann in diesem Falle dadurch thermisch aufgeweicht werden, daß sich in einer Heißpreßstation ein entsprechend heißer Stempel der entsprechenden Oberfläche nähert. Man kann aber auch andere Wärmequellen, insbesondere Wärmestrahler, vorsehen, um die fragliche Oberfläche zu erweichen.

In der durch die Formhohlräume 48 und 49 sowie die Preßform 59 definierten Ebene ist ein Handlingsystem 75 verfahrbar, das im wesentlichen aus einem Arm 76 besteht. Der Arm 76 ist in Richtung eines Pfeils 77 in der genannten Ebene verfahrbar.

Auf dem freien Ende des Armes 76 sind drei Haltepositionen 78, 79, 80 vorgesehen. In der Darstellung gemäß Fig. 3 liegen die erste Halteposition 78 und die zweite Halteposition 79 auf der linken Seite nebeneinander, während sich die dritte Halteposition 80 gegenüber der zweiten Halteposition 79 auf der rechten Seite des Armes 76 befindet. Die Abstände der Haltepositionen 78 einerseits und 79/80 andererseits in Richtung des Pfeiles 77 entsprechen dem Abstand der Formhohlräume 48 einerseits und 49/50 andererseits.

Wenn in der oben beschriebenen Weise vorgesehen ist, die Oberfläche der ersten Kartenhälfte 13, an der die Spule 12 oder ein anderer Gegenstand angebracht werden soll, zu erweichen, so kann bei der vorstehend beschriebenen Konfiguration des Handlingsystems 75 der Arm 76 mit entsprechenden Wärmequellen, beispielsweise Infrarotstrahlern, bestückt sein.

Als weitere Alternative sei an dieser Stelle erwähnt, daß die erste Kartenhälfte 13 vor dem Anbringen der Spule 12 oder eines anderen Gegenstandes auch in anderer Weise vorbehandelt werden kann. Dies kann z.B. durch Aufdrucken, Bedampfen oder mechanische Bearbeitung geschehen. Die entsprechenden Werkzeuge können entweder separat betätigbar oder Teile des Handlingsystems sein. Wenn die frei liegende Oberfläche der ersten Kartenhälfte 13 bedruckt oder bedampft werden soll, so kann durch das Bedrucken oder Bedampfen bereits die Spule (Antenne) selbst hergestellt werden. Es ist dann nur noch erforderlich, an der auf diese Weise hergestellten Antenne einen Chip und/oder Außenkontakte der Karte anzubringen, ehe die zweite Kartenhälfte 14 aufgespritzt wird.

Die Haltepositionen 78, 79, 80 können pneumatisch, magnetisch, elektrostatisch, mechanisch oder dergleichen ausgebildet sein. Sie sind im Rahmen der vorliegenden Anmeldung nur schematisch angedeutet.

Neben dem Handlingsystem 75 und der Zuführeinrichtung 65 befindet sich noch eine Abführeinrichtung 85 für die fertigen Karten 10. Die Abführeinrichtung 85 besteht aus einem zweiten Förderer 86, der vorzugsweise wiederum ein Förderband ist. Mit einer strich-punktierten Linie ist wiederum ein Förderweg 87 angedeutet. Die Anordnung ist so getroffen, daß die von der dritten Halteposition abgenommenen Karten 10 zunächst um 90° gedreht werden, wie mit einem Pfeil 88 angedeutet, so daß sie dann eben auf dem zweiten Förderer 86 aufgelegt und abgefördert werden können.

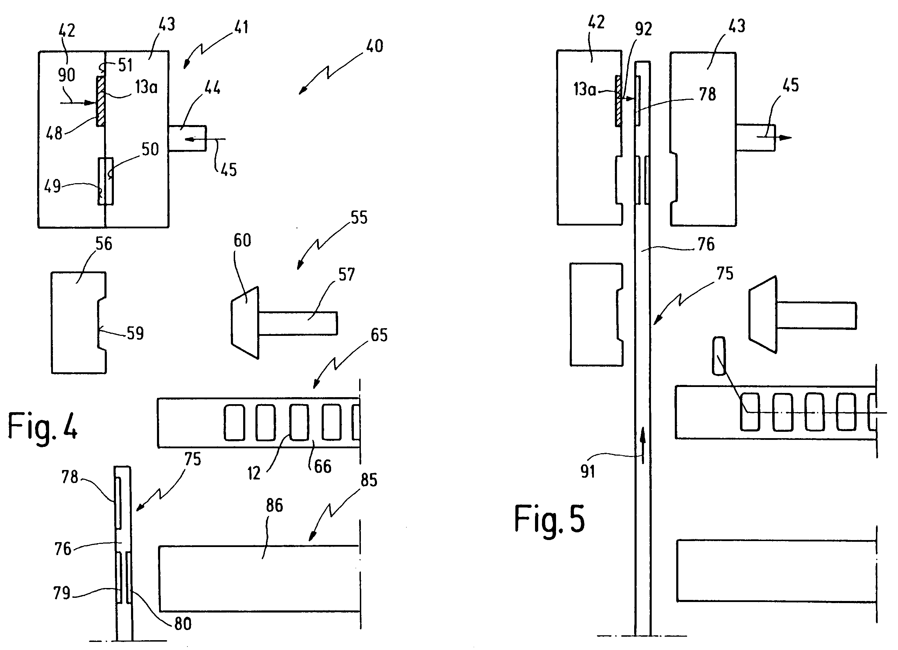

Die Wirkungsweise der Spritzgießmaschine 40 gemäß Fig. 3 wird nun anhand der Figuren 4 bis 17 näher erläutert werden:

Figur 4 zeigt die Ausgangsposition, bei der zu Beginn der Produktion die erste Karte 10 hergestellt werden soll. Durch Betätigen der Stange 44 in Richtung des Pfeils 45 wird die bewegliche Werkzeughälfte 43 auf die feste Werkzeughälfte 42 zubewegt, bis das Werkzeug 41 geschlossen ist. Der erste Formhohlraum 48 wird durch die glatte Oberfläche 51 abgeschlossen. Wie mit einem Pfeil 90 angedeutet, kann nun durch Einspritzen von Kunststoff die erste Kartenhälfte 13a durch Spritzgießen hergestellt werden. Der zweite Formhohlraum 49 und der dritte Formhohlraum 50 liegen aneinander, bleiben aber bei diesem allerersten Vorgang noch leer.

In der Heißpreßstation liegt die feste Pressenhälfte 56 mit der Preßform 59 offen. Die bewegliche Pressenhälfte 57 mit dem Stempel 60 befindet sich in der geöffneten, d.h. zurückgezogenen Position.

Auf der Zuführeinrichtung 65 befinden sich Spulen 12 auf dem ersten Förderer 66, haben diesen aber noch nicht verlassen.

Das Handlingsystem 75 befindet sich mit dem Arm 76 und dessen Haltepositionen 78, 79, 80 in einer zurückgezogenen Stellung.

Die Abführeinrichtung 85 mit dem zweiten Förderer 86 ist leer.

Gemäß Fig. 5 wird nun die bewegliche Werkzeughälfte 43 weggefahren (Pfeil 45). Der Arm 76 des Handlingsystems 75 wird nun zwischen die Werkzeughälften 42, 43 vorgefahren, bis sich die erste Halteposition 78 gegenüber der soeben spritzgegossenen ersten Kartenhälfte 13a befindet. Diese wird der ersten Halteposition 78 übergeben (Pfeil 92).

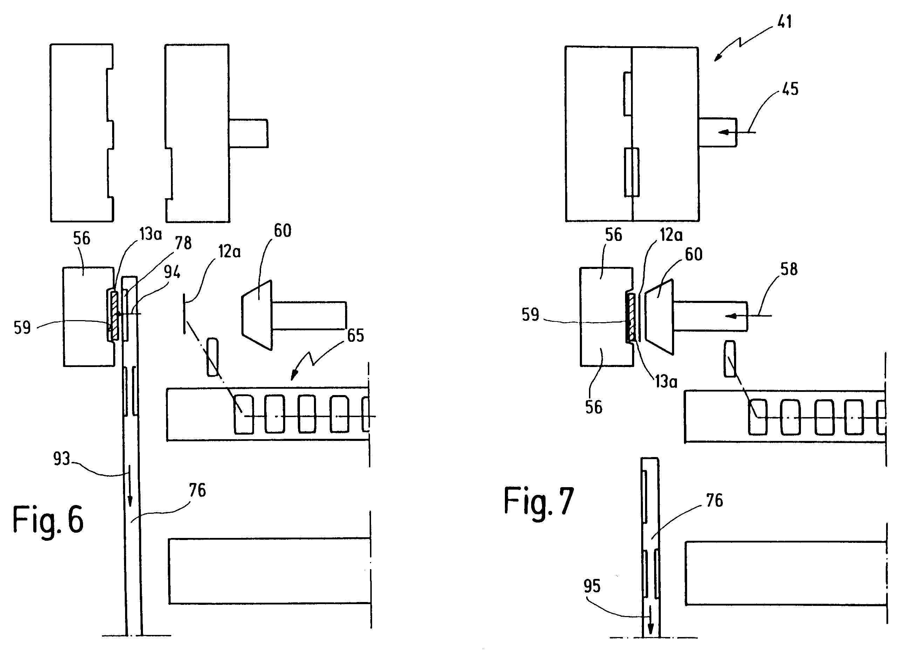

Gemäß Fig. 6 wird nun der Arm 76 zurückgezogen (Pfeil 93), bis sich die erste Halteposition 78 gegenüber der Preßform 59 der festen Pressenhälfte 56 befindet. Die erste Kartenhälfte 13a wird nun auf die Preßform 59 übergeben (Pfeil 94). Währenddessen wird bereits eine erste Spule 12a in der Zuführeinrichtung 65 vor dem Stempel 60 bereitgestellt.

Gemäß Fig. 7 wird nun der Arm 76 wieder ganz eingefahren (Pfeil 95). Gleichzeitig wird der Stempel 60 vorgefahren (Pfeil 58) und nimmt dabei die Spule 12a mit. Die Spule 12a wird nun mit der ersten Kartenhälfte 13a auf der Preßform 59 heiß verpreßt.

Gleichzeitig wird das Werkzeug 41 wieder geschlossen (Pfeil 45).

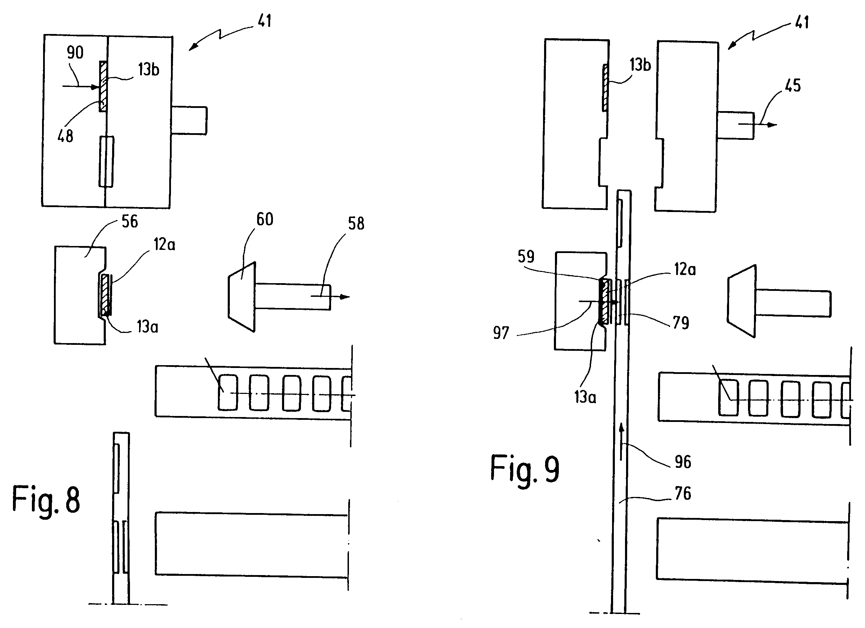

Gemäß Fig. 8 wird nun im erneut geschlossenen Werkzeug 41, und zwar im ersten Formhohlraum 48, eine zweite erste Kartenhälfte 13b durch Spritzgießen hergestellt (Pfeil 90).

Gleichzeitig wird der Stempel 60 zurückgefahren (Pfeil 58), so daß der Verbund aus erster Kartenhälfte 13a und Spule 12a auf der festen Pressenhälfte 56 frei liegt.

Gemäß Fig. 9 wird nun der Arm 76 wieder vorgefahren (Pfeil 96), bis die zweite Halteposition 79 sich gegenüber dem Verbund aus erster Kartenhälfte 13a und Spule 12a in der Preßform 59 befindet. Der Verbund wird nun auf die zweite Halteposition 79 übergeben (Pfeil 97). Währenddessen wird das Werkzeug 41 geöffnet (Pfeil 45), so daß die als zweites hergestellte erste Kartenhälfte 13b frei liegt.

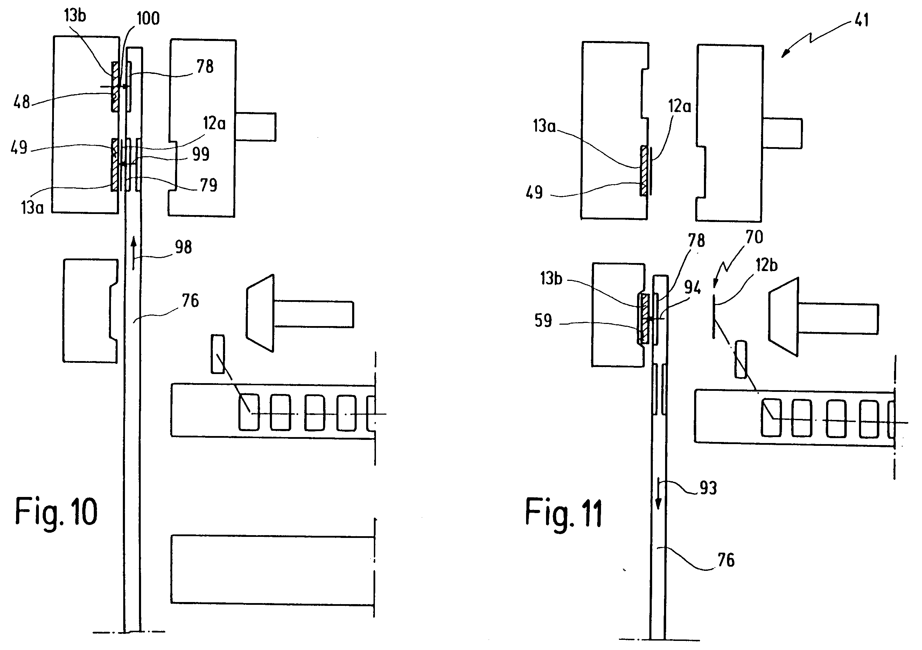

Gemäß Figur 10 wird nun der Arm 76 noch weiter vorgefahren (Pfeil 98), bis sich die erste Halteposition 78 gegenüber dem ersten Formhohlraum 48 und die zweite Halteposition 79 gegenüber dem zweiten Formhohlraum 79 befindet. Es werden nun der Verbund, bestehend aus erster Kartenhälfte 13a und Spule 12a, in den zweiten Formhohlraum 49 übergeben (Pfeil 99). Die als zweites hergestellte erste Kartenhälfte 13b wird aus dem ersten Formhohlraum 48 in die erste Halteposition 78 übergeben (Pfeil 100). Diese beiden Vorgänge finden vorzugsweise gleichzeitig statt.

Gemäß Fig. 11 wird nun der Arm 76 wieder zurückgefahren (Pfeil 93), bis sich die erste Halteposition 78 gegenüber der Preßform 59 befindet. Die als zweites hergestellte erste Kartenhälfte 13b wird nun auf die Preßform 59 übergeben (Pfeil 94). Gleichzeitig wird eine zweite Spule 12b in die Übergabeposition 70 gebracht.

Da das Werkzeug 41 noch offen ist, liegt der Verbund aus der als erstes hergestellten ersten Kartenhälfte 13a und der Spule 12a noch offen im zweiten Formhohlraum 49.

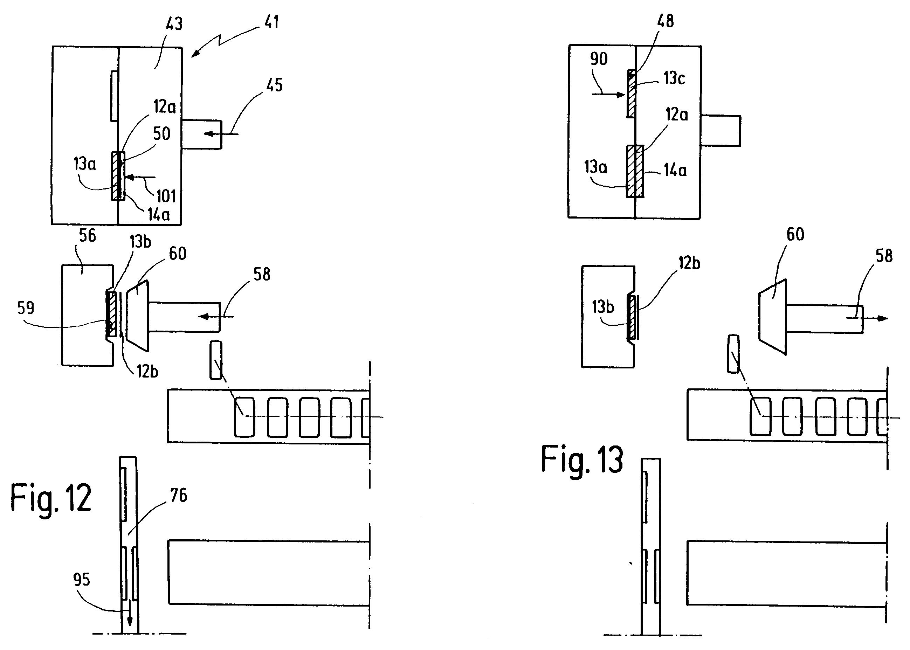

Gemäß Fig. 12 wird nun der Arm 76 wieder ganz zurückgefahren (Pfeil 95). Der Stempel 60 wird vorgefahren, um die Spule 12b mit der als zweites hergestellten ersten Kartenhälfte 13b in der Preßform 59 der festen Pressenhälfte 56 durch Heißpressen zu verbinden. Das Werkzeug 41 wird geschlossen (Pfeil 45), und es wird Kunststoffmasse in den dritten Formhohlraum 50 eingespritzt (Pfeil 101), so daß die zweite Kartenhälfte 14a auf die Spule 12a und die erste Kartenhälfte 13a aufgespritzt wird.

Auch diese Vorgänge laufen bevorzugt zeitlich parallel ab.

Gemäß Fig. 13 wird nun der Stempel 60 wieder Zurückgefahren (Pfeil 58), so daß der Verbund aus erster Kartenhälfte 13b und Spule 12b frei liegt. In den ersten Formhohlraum 48 wird Kunststoffmasse eingespritzt (Pfeil 90), um eine dritte erste Kartenhälfte 13c herzustellen.

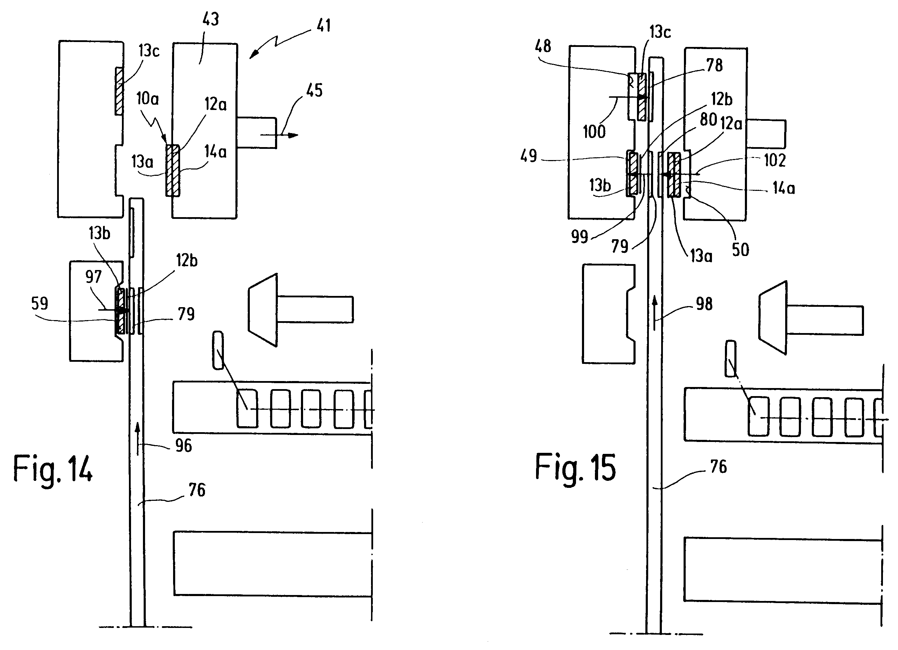

Gemäß Fig. 14 wird nun der Arm 76 wieder vorgefahren (Pfeil 96), bis sich die zweite Halteposition 79 gegenüber der Preßform 59 befindet. Der Verbund aus erster Kartenhälfte 13b und Spule 12b wird nun in die zweite Halteposition 79 übergeben (Pfeil 97). Das Werkzeug 41 wird geöffnet (Pfeil 45), so daß die als drittes hergestellte erste Kartenhälfte 13c sowie die erste fertige Karte 10a, bestehend aus den Kartenhälften 13a, 14a sowie der Spule 12a frei liegen.

Gemäß Fig. 15 wird nun der Arm 76 noch weiter vorgefahren (Pfeil 98), bis sich die erste Halteposition 78 gegenüber dem ersten Formhohlraum 48, die zweite Halteposition 79 gegenüber dem zweiten Formhohlraum 49 und die dritte Halteposition 80 sich gegenüber dem dritten Formhohlraum 50 befinden.

Es wird nun der Verbund aus der als zweites hergestellten ersten Kartenhälfte 13b mit Spule 12b in den zweiten Formhohlraum 49 übergeben (Pfeil 99), es wird die als drittes hergestellte erste Kartenhälfte 13c aus dem ersten Formhohlraum 48 in die erste Halteposition 78 übergeben (Pfeil 100), und es wird die erste fertige Karte 10a bestehend aus den Kartenhälften 13a, 14a sowie der Spule 12a aus dem dritten Formhohlraum 50 in die dritte Halteposition 80 übergeben (Pfeil 102).

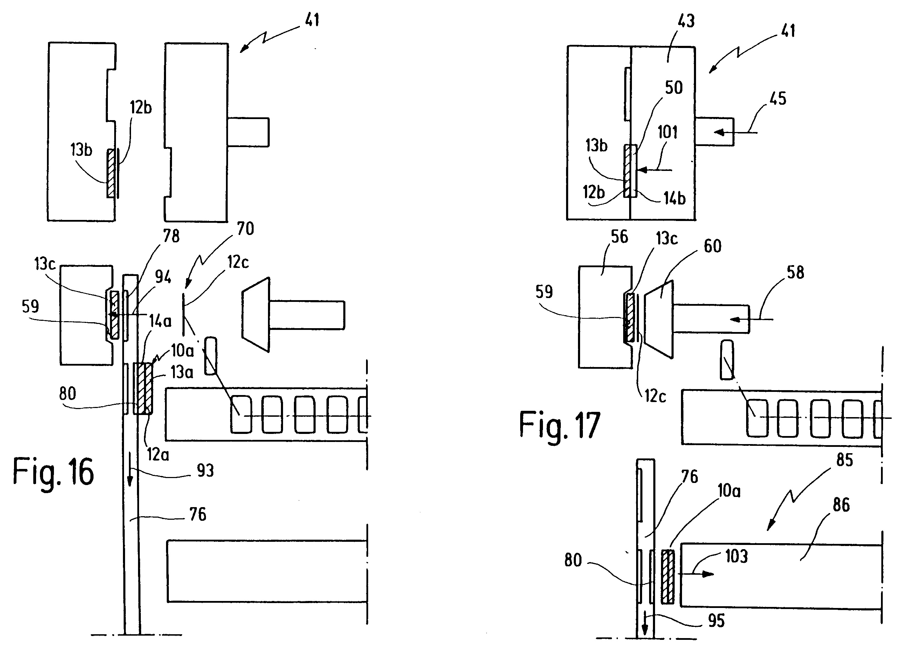

Gemäß Fig. 16 wird der Arm 76 nun wieder zurückgefahren (Pfeil 93), bis sich die erste Halteposition 78 wieder gegenüber der Preßform 59 befindet. Die als drittes hergestellte erste Kartenhälfte 13c wird nun in die Preßform 59 übergeben (Pfeil 94), während zugleich eine dritte Spule 12c in der Übergabeposition 70 bereitgestellt wird.

Bei immer noch geöffnetem Werkzeug 41 liegt der Verbund aus der als zweites hergestellten ersten Kartenhälfte 13b sowie Spule 12b frei. Entsprechendes gilt für die erste hergestellte Karte 10a, die sich frei in der dritten Halteposition 80 befindet.

Der Arm 76 wird nun noch weiter zurückgefahren (Pfeil 95), bis sich die dritte Halteposition 80 auf der Höhe des zweiten Förderers 86 befindet. Die erste Karte 10a wird nun von der dritten Kalteposition 80 auf den zweiten Förderer 86 übergeben (Pfeil 103).

Der Stempel 60 fährt vor (Pfeil 58) und preßt die dritte Spule 12c auf die als drittes hergestellte erste Kartenhälfte 13c in der Preßform 59.

Bei geschlossenem Werkzeug 41 wird in den dritten Formhohlraum 50 Kunststoff eingespritzt (Pfeil 101), so daß eine zweite Kartenhälfte 14b auf die als zweites hergestellte erste Kartenhälfte 13b sowie die Spule 12b aufgespritzt wird.

Damit ist die erste Karte 10a hergestellt und befindet sich auf der Abführeinrichtung 85. Der Betrieb der Spritzgießmaschine 40 läuft nun zyklisch in der beschriebenen Weise weiter, wobei sich an die in Fig. 17 dargestellte Phase die Phasen gemäß Fig. 13 ff. periodisch anschließen.

Es versteht sich dabei, daß die in den Figuren 4 bis 17 dargestellten Abläufe in ihrer zeitlichen Abfolge auch verändert werden können, solange die logische und aufgrund der Herstellung erforderliche Folge der Schritte beibehalten wird. So können einzelne Schritte früher oder später oder synchron mit anderen Schritten ablaufen, das Werkzeug kann früher oder später geöffnet, und der Arm kann früher oder später vorgeschoben werden, je nachdem, wie dies zu einer Optimierung des Gesamtprozesses erforderlich ist. Insofern ist also die geschilderte Folge von Schritten nicht einschränkend zu verstehen.

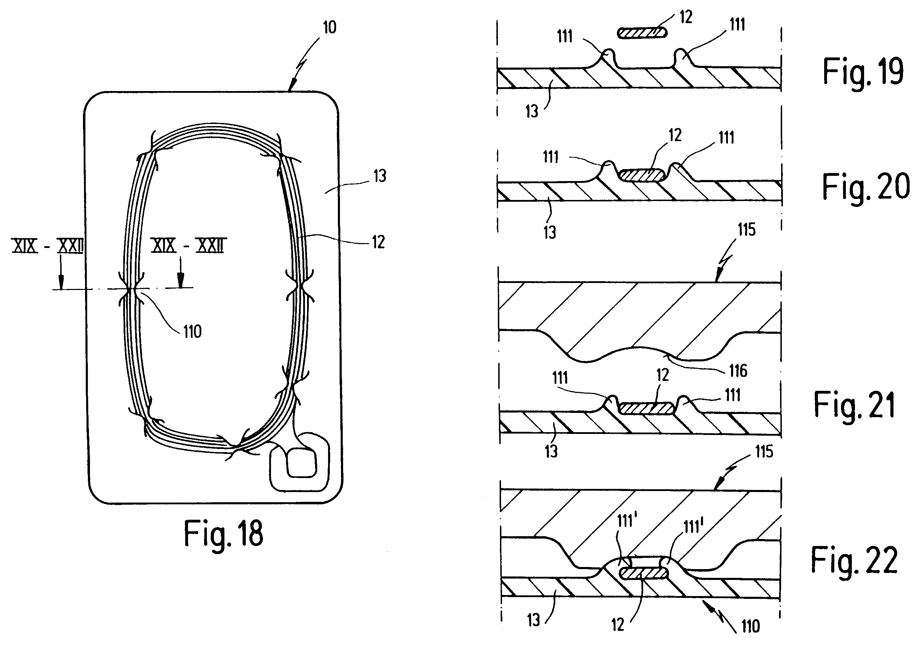

Fig. 18 zeigt eine Draufsicht auf eine erste Kartenhälfte 13 in dem Augenblick, in dem die Spule 12 aufgebracht und dort fixiert worden ist. Wie man aus Fig. 18 erkennt, ist die Spule 12 nur an einzelnen Befestigungspunkten 110, also nur bereichsweise, fixiert.

Aus der vergrößerten Schnittdarstellung gemäß den Figuren 19 bis 22 erkennt man, daß die erste Kartenhälfte 13 im Bereich der Befestigungspunkte 110 mit Wülsten 111 oder Vorsprüngen versehen ist, der Abstand etwa der Breite der Spule 12 entspricht (Fig. 19).

Die Spule 12 wird nun zwischen die Wülste 111 eingelegt (Fig. 20).

Es wird nun von oben ein Heißpreßstempel 115 herangefahren, der auf seiner der Kartenhälfte 3 zuweisenden Seite mit einem geeigneten Profil 116 versehen ist (Fig. 21).

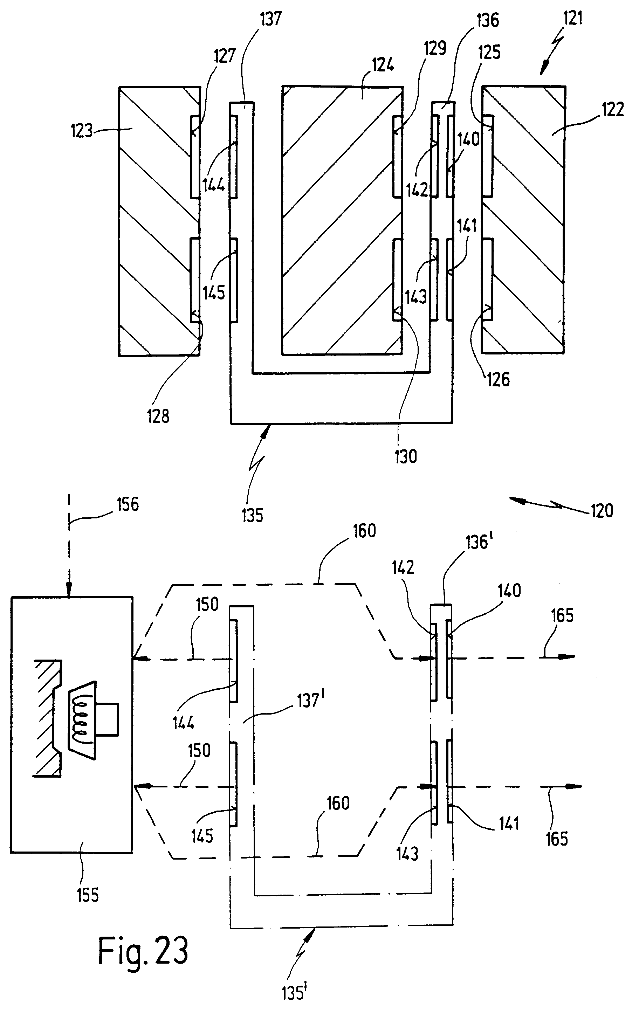

Der Heißpreßstempel 115 wird nun aufgesetzt und formt die Wülste 111 nach 111' um. Dies geschieht in der Weise, daß die Wülste 111' die Spule 12 von deren Oberseite her etwas überlappen. Die Spule 12 wird auf diese Weise fixiert (Fig. 22).

Schließlich zeigt Fig. 23 noch ein weiteres Ausführungsbeispiel einer erfindungsgemäßen Spritzgießmaschine 120.

Die Spritzgießmaschine 120 umfaßt ein Etagenwerkzeug 121 von an sich bekannter Bauart. Das Etagenwerkzeug 121 umfaßt eine feste Werkzeughälfte 122, eine bewegliche Werkzeughälfte 123 sowie ein dazwischen angeordnetes Mittelpaket 124. Die Anschlüsse, Bewegungseinrichtungen usw. sind von herkömmlicher Gestaltung und daher der Übersichtlichkeit halber nicht dargestellt.

Ein erster Formhohlraum 125 und ein zweiter Formhohlraum 126 befinden sich in der festen Werkzeughälfte 122, auf der dem Mittelpaket 124 zuweisenden Seite. In entsprechender Weise ist die bewegliche Werkzeughälfte 123 mit einem dritten und einem vierten Formhohlraum 127, 128 versehen. Nur auf der der festen Werkzeughälfte 122 zuweisenden Seite ist das Mittelpaket 124 mit komplementären Formhohlräumen, nämlich einem fünften Formhohlraum 129 sowie einem sechsten Formhohlraum 130 versehen.

Ein mit 135 bezeichnetes Handlingsystem ist gabelförmig ausgebildet. Ein erster Arm 136 ist bei geöffnetem Werkzeug 121 zwischen das Mittelpaket 124 und die feste Werkzeughälfte 122 einfahrbar, während sich in dieser Position ein zweiter Arm 137 zwischen dem Mittelpaket 124 und der beweglichen Werkzeughälfte 123 befindet.

Die Arme 136, 137 sind an den den Formhohlräumen 125 bis 130 zuweisenden Seiten mit entsprechenden Haltepositionen 140 bis 145 versehen.

Das Handlingsystem 135 kann aus der in Fig. 23 oben durchgezogen eingezeichneten Stellung in eine unten strich-punktiert eingezeichnete Stellung 135' verfahren, verschwenkt oder sonstwie bewegt werden.

Die Zyklusfolge bei der Spritzgießmaschine 120 gemäß Fig. 23 ist ähnlich wie die Zyklusfolge der Spritzgießmaschine 40 gemäß Fig. 3, wie sie anhand der Figuren 4 bis 17 erläutert wurde. Im dritten und vierten Formhohlraum 127, 128 werden dabei erste Kartenhälften hergestellt, die nach dem Heißverpressen mit Antennen in den fünften und sechsten Formhohlraum 129, 130 des Mittelpakets 124 überführt und dort in Verbindung mit dem ersten und dem zweiten Formhohlraum 125, 126 zu fertigen Karten komplettiert werden.

Dies ist in Fig. 23 unten angedeutet. Ein Pfeil 150 kennzeichnet den Weg der ersten Kartenhälften, die von den Haltepositionen 144, 145 des zweiten Arms 137 des Handlingsystems 135 aus den Formhohlräumen 127, 128 übernommen wurden, zu einer Heißpreßstation 155. Der Heißpreßstation 155 werden über eine nur schematisch angedeutete Zuführeinrichtung 156 die Spulen zugeführt. Diese werden in der Heißpreßstation 155 mit den ersten Kartenhälften verbunden.

Pfeile 160 symbolisieren nun den Weg der mit Antennen versehenen ersten Kartenhälften in die Haltepositionen 142, 143 des ersten Armes 136', von wo sie den Formhohlräumen 129, 130 des Mittelpakets 124 zugeführt werden. Nach dem Komplettieren der Karten durch Aufspritzen der zweiten Kartenhälfte (Formhohlräume 125, 126) werden die fertigen Karten von den Haltepositionen 140, 141 dem Werkzeug 121 entnommen. Sie können dann, wie mit Pfeilen 165 angedeutet, einer Abführeinrichtung zugeführt werden.

Beim Ausführungsbeispiel gemäß Fig. 23 werden parallel jeweils zwei Karten hergestellt. Es vesteht sich jedoch, daß dies nur beispielhaft zu verstehen ist und daß mit dem Etagenwerkzeug 121 auch eine sehr viel größere Anzahl von Karten gleichzeitig hergestellt werden kann, wenn die Zahl der Formhohlräume und der Haltepositionen entsprechend vermehrt wird.

## Patentansprüche

1. Verfahren zum Spritzgießen von eine Spule (12) enthaltenden Codekarten (10), gekennzeichnet durch die Schritte:
a) Spritzgießen einer ersten Kartenhälfte (13);
b) Anbringen der Spule (12) an der ersten Kartenhälfte (13); und
c) Spritzgießen einer zweiten Kartenhälfte (14) auf die erste Kartenhälfte (13), derart, daß die Spule (12) zwischen den beiden Kartenhälften (13, 14) eingebettet ist.

2. Verfahren nach Anspruch 1, dadurch gekennzeichnet, daß die Schritte a) und c) in demselben Werkzeug (20; 41; 121) einer Spritzgießmaschine (40; 120) ausgeführt werden.

3. Verfahren nach Anspruch 2, dadurch gekennzeichnet, daß Schritt a) in einem ersten Formhohlraum (31, 32; 48; 127, 128) und Schritt b) und/oder Schritt c) in einem zweiten Formhohlraum (30/31, 30/32; 49/50; 125/129, 126/130) des Werkzeugs (20; 41; 121) ausgeführt wird.

4. Verfahren nach Anspruch 3, dadurch gekennzeichnet, daß die erste Kartenhälfte (13) vom ersten Formhohlraum (31, 32) in den zweiten Formhohlraum (30/31, 30/32) durch Verdrehen zweier Werkzeughälften (21, 22) zueinander überführt wird.

5. Verfahren nach Anspruch 3, dadurch gekennzeichnet, daß die erste Kartenhälfte (13) vom ersten Formhohlraum (48) in den zweiten Formhohlraum (49/50) mittels eines ersten Handlingsystems (75) überführt wird, das im geöffneten Zustand des aus zwei axial zueinander verfahrbaren Werkzeughälften (42, 43) bestehenden Werkzeugs (41) zwischen die Werkzeughälften (42, 43) einfährt.

6. Verfahren nach Anspruch 3, dadurch gekennzeichnet, daß die erste Kartenhälfte (13) vom ersten Formhohlraum (127, 128) in den zweiten Formhohlraum (125/129, 126/130) mittels eines ersten Handlingsystems (135) überführt wird, das im geöffneten Zustand des aus einem Mittelpaket (124) und zwei auf gegenüberliegenden Seiten desselben angeordneten Werkzeughälften (122, 123) bestehenden Etagenwerkzeugs (121) zwischen das Mittelpaket (124) und die beiden Werkzeughälften (122, 123) einfährt.

7. Verfahren nach einem oder mehreren der Ansprüche 1 bis 6, dadurch gekennzeichnet, daß die Schritte a) und b) gleichzeitig innerhalb eines Werkzeugs (20; 41; 121) einer Spritzgießmaschine (40; 120) ausgeführt werden.

8. Verfahren nach einem oder mehreren der Ansprüche 1 bis 6, dadurch gekennzeichnet, daß die Schritte a) und b) zeitlich nacheinander ausgeführt werden.

9. Verfahren nach Anspruch 8, dadurch gekennzeichnet, daß Schritt b) außerhalb des für Schritt a) verwendeten Werkzeugs (41; 121) ausgeführt wird.

10. Verfahren nach Anspruch 9, dadurch gekennzeichnet, daß zum Durchführen von Schritt b) eine separate Anbringstation verwendet wird.

11. Verfahren nach Anspruch 10, dadurch gekennzeichnet, daß die erste Kartenhälfte (13) mittels eines zweiten Handlingsystems (75; 135) vom Werkzeug (41; 121) zur Anbringstation überführt wird, wobei vorzugsweise dasselbe Handlingsystem (75; 135) als erstes und als zweites Handlingsystem (75; 135) verwendet wird.

12. Verfahren nach Anspruch 10 oder 11, dadurch gekennzeichnet, daß die Spule (12) in der Anbringstation durch Kleben an der ersten Kartenhälfte (13) angebracht wird, daß vorzugsweise die Spule (12) zusammen mit einer Träger-Klebefolie für die Spule (12) an der ersten Kartenhälfte (13) angebracht wird, und daß weiter vorzugsweise die Träger-Klebefolie mit der Spule (12) und zusammen mit einem mit der Spule (12) galvanisch verbundenen und ebenfalls auf der Träger-Klebefolie angeordneten Chip (11) an der ersten Kartenhälfte (13) angebracht wird.

13. Verfahren nach einem oder mehreren der Ansprüche 10 bis 12, dadurch gekennzeichnet, daß die Spule (12) auf die erste Kartenhälfte (13) aufgedruckt und ein Chip (13) in der Anbringstation an der mit der Spule (12) bedruckten ersten Kartenhälfte (13) angebracht wird.

14. Verfahren nach einem oder mehreren der Ansprüche 10 bis 13, dadurch gekennzeichnet, daß die Anbringstation eine Heißpreßstation (55; 155) ist.

15. Verfahren nach Anspruch 14, dadurch gekennzeichnet, daß die Spule (12) in der Heißpreßstation (55; 155) nur abschnittsweise mit der ersten Kartenhälfte (13) verbunden wird, daß vorzugsweise auf der ersten Kartenhälfte (13) entlang der Kontur der Spule (12) bereichsweise beidseits der Kontur Wülste (111) ausgebildet werden, daß die Spule (12) zwischen die Wülste (111) eingelegt wird, und daß die Wülste (111) nach dem Einlegen der Spule (12) durch Heißpressen umgeformt werden, derart, daß sie die Spule (12) auf deren Oberseite überlappen.

16. Verfahren nach einem oder mehreren der Ansprüche 1 bis 15, dadurch gekennzeichnet, daß die Spule (12) zusammen mit einem Chip (11) als gemeinsame Anordnung gehandhabt wird.

17. Verfahren zum Spritzgießen von Kunststoffteilen, insbesondere nach einem oder mehreren der vorhergehenden Ansprüche, gekennzeichnet durch die Schritte:
a) Spritzgießen einer ersten Hälfte des Teils;
b) Anbringen eines Gegenstandes an der ersten Hälfte;
c) Spritzgießen einer zweiten Hälfte des Teils auf die erste Hälfte, derart, daß der Gegenstand zwischen den beiden Hälften eingebettet ist.

18. Verfahren nach Anspruch 17, dadurch gekennzeichnet, daß der Gegenstand ein Aufdruck, eine Bedampfung, eine Folie, ein plastisches Teil, ein Hologramm, ein Magnet oder eine Bearbeitung, insbesondere Gravierung der ersten Hälfte ist.

19. Verfahren nach einem oder mehreren der Ansprüche 1 bis 18, dadurch gekennzeichnet, daß mindestens eine der Hälften aus einem transparenten Material besteht.

20. Vorrichtung zum Spritzgießen von eine Spule (12) enthaltenden Codekarten (10), mit einem Werkzeug (20; 41; 121) und mit Formhohlräumen (30 - 32; 48 - 50; 125 - 130) im Werkzeug (20; 41; 121), dadurch gekennzeichnet, daß bei geschlossenem Werkzeug (20; 41; 121) erste Formhohlräume (31, 32; 48; 127, 128) der Form einer ersten Kartenhälfte (13) und zweite Formhohlräume (30/31, 30/32; 49/50; 125/129, 126/130) der Form der fertigen Codekarte (10) entsprechen, daß erste Mittel zum Anbringen der Antenne (12) an der ersten Kartenhälfte (13) und daß zweite Mittel vorgesehen sind, um die in den ersten Formhohlräumen (31, 32; 48; 127, 128) spritzgegossenen Kartenhälften (13) in die zweiten Formhohlräume (30/31, 30/32; 49/50; 125/129, 126/130) zu überführen, derart, daß durch Aufspritzen einer zweiten Kartenhälfte (14) auf die erste Kartenhälfte (13) die fertige Codekarte (10) hergestellt wird, bei der die Antenne (12) zwischen den beiden Kartenhälften (13, 14) eingebettet ist.

21. Vorrichtung nach Anspruch 20, dadurch gekennzeichnet, daß das Werkzeug (20) aus zwei zueinander verdrehbaren Werkzeughälften (21, 22) besteht, und daß die erste Kartenhälfte (13) durch Verdrehen der Werkzeughälften (21, 22) zueinander vom ersten Formhohlraum (31, 32) in den zweiten Formhohlraum (30/31, 30/32) überführt wird.

22. Vorrichtung nach Anspruch 20, dadurch gekennzeichnet, daß das Werkzeug (41) aus zwei axial zueinander verfahrbaren Werkzeughälften (42, 43) besteht, und daß ein erstes Handlingsystem (75) vorgesehen ist, um im geöffneten Zustand der Werkzeughälften (42, 43) die erste Kartenhälfte (13) vom ersten Formhohlraum (48) in den zweiten Formhohlraum (49/50) zu überführen.

23. Vorrichtung nach Anspruch 20, dadurch gekennzeichnet, daß das Werkzeug (121) ein Etagenwerkzeug mit einem Mittelpaket (124) und zwei auf gegenüberliegenden Seiten desselben angeordneten Werkzeughälften (122, 123) ist, und daß ein erstes Handlingsystem (135) vorgesehen ist, um im geöffneten Zustand des Werkzeugs (121) die erste Kartenhälfte (13) vom ersten Formhohlraum (127, 128) zum zweiten Formhohlraum (125/129, 126/130) zu überführen.

24. Vorrichtung nach einem oder mehreren der Ansprüche 20 bis 23, dadurch gekennzeichnet, daß außerhalb des Werkzeugs (41; 121) eine Anbringstation zum Anbringen der Spule (12) auf der ersten Kartenhälfte (13) vorgesehen ist.

25. Vorrichtung nach Anspruch 24, dadurch gekennzeichnet, daß ein zweites Handlingsystem (75; 135) zum Überführen der ersten Kartenhälfte (13) vom Werkzeug (41; 121) zur Anbringstation vorgesehen ist, wobei vorzugsweise das erste und das zweite Handlingsystem (75; 135) dasselbe Handlingsystem (75; 135) sind.

26. Vorrichtung zum Spritzgießen von Kunststoffteilen, insbesondere nach einem oder mehreren der Ansprüche 20 bis 25, gekennzeichnet durch:
a) Mittel zum Spritzgießen einer ersten Hälfte des Teils
b) Mittel zum Anbringen eines Gegenstandes an der ersten Hälfte; und
c) Mittel zum Spritzgießen einer zweiten Hälfte des Teils auf die erste Hälfte, derart, daß der Gegenstand zwischen den beiden Hälften eingebettet ist.
